# FASCICULE DE BREVET EUROPEEN

(11) **EP 2 098 410 B1**
(45) Date de publication et mention de la délivrance du brevet: **18.08.2010**
(21) Numéro de dépôt: 09153680.5
(22) Date de dépôt: 25.02.2009
(51) Int. Cl.: B60R 5/00, B60R 11/00, B60R 7/00, B60P 7/135

(54) **Dispositif de galerie intérieure pour véhicule automobile, et véhicule automobile correspondant**
Innendachträger für Kraftfahrzeuge und entsprechendes Kraftfahrzeug
Interior roof carrier for vehicles and corresponding vehicle

(30) Priorité: 06.03.2008 FR 0851478
(43) Date de publication de la demande: 09.09.2009
(73) Titulaire: Advanced Comfort Systems France - ACS France, 79300 Bressuire (FR)
(72) Inventeur: Bosseboeuf, Damien, 79300, Bressuire (FR); Jean, Anthony, 50810, Saint Jean des Baisants (FR); Chemineau, Nicolas, 85310, Chaille sous les Ormeaux (FR); Gerbeau, Serge, 79300, Saint Sauveur (FR)
(74) Mandataire: Bioret, Ludovic

(56) Documents cités:
- EP-A- 1 661 761
- EP-A- 1 681 204
- US-A- 4 881 673

## Description

### 1. Domaine de l'invention

Le domaine de l'invention est celui des équipements pour véhicule automobile. Plus précisément, l'invention concerne le transport et le maintien d'objets, tels que des planches, et plus généralement des objets allongés (skis, échelle, tuyaux,...), à l'aide de traverses de galerie montées au voisinage du pavillon du véhicule, à l'intérieur de celui-ci.

L'invention s'applique notamment aux véhicules utilitaires, aux breaks, aux monospaces, et plus généralement aux véhicules dont le volume intérieur permet la mise en place de telles traverses.

### 2. Art antérieur

On connaît déjà des systèmes prévoyant des traverses à l'intérieur du véhicule, au niveau du pavillon. A titre d'exemple, le titulaire de la présente demande de brevet a développé une barre de galerie, décrite dans le document de brevet EP- 1 661 761, et conçue pour pouvoir être installée aussi bien à l'extérieur du véhicule qu'à l'intérieur de celui-ci.

Un des inconvénients des traverses de galerie montées à l'intérieur du véhicule est qu'elles sont encombrantes, et gênantes, lorsqu'elles ne sont pas utilisées. Elles diminuent en effet l'espace utile intérieur.

En outre, ces barres peuvent être dangereuses. Par exemple, la tête d'un passager peut-être projeté contre cette barre, en cas de freinage ou de choc violent. Au niveau européen, une telle galerie doit d'ailleurs respecter la réglementation ECE21, comme tout produit destiné à une mise en oeuvre à l'intérieur de l'habitacle. Le document EP-A-1 682 204 décrit les caractéristiques du

### préambule de la revendication 1.

### 3. Objectifs de l'invention

L'invention a notamment pour objectif de pallier certains des inconvénients de l'art antérieur.

Plus précisément, au moins selon certains modes de réalisation, un objectif de l'invention est de fournir une technique simple et efficace d'escamotage des traverses ou barres de galerie, lorsqu'elles ne sont pas utilisées.

Un autre objectif de l'invention, au moins selon certains modes de réalisation, est de fournir une technique répondant à la normalisation ECE21, et permettant donc de réduire les risques et la gravité d'un choc, lorsque un objet ou une tête, vient heurter la barre.

### 4. Caractéristiques principales de l'invention

Ces objectifs, ainsi que d'autres qui apparaîtront plus clairement par la suite, sont atteints à l'aide d'un dispositif de galerie intérieure pour véhicule automobile, comprenant au moins une barre s'étendant au voisinage du pavillon dudit véhicule.

Selon l'invention, ladite barre comprend une traverse et deux pieds portant des premiers moyens de fixation aptes à coopérer avec des seconds moyens de fixation complémentaires solidaires d'un élément de liaison avec le châssis dudit véhicule, lesdits premiers et/ou seconds moyens de fixation permettant de maintenir ladite barre dans au moins deux positions distinctes, correspondant à un retournement à 180° desdits pieds :
- une position escamotée, dans laquelle ladite traverse s'étend au voisinage dudit pavillon ;
- une position de portage, dans laquelle ladite traverse est éloignée dudit pavillon, de façon à pouvoir recevoir une charge à transporter.

Ainsi, il est aisé de passer d'une position à l'autre, par basculement de la barre de galerie, et donc de libérer l'espace lorsque celle-ci n'est pas utilisée.

Selon un mode de réalisation avantageux, lesdits premiers moyens de fixation comprennent une molette montée à l'extrémité d'une vis coopérant avec un taraudage formé dans ledit élément de liaison.

L'utilisateur peut aisément, et sans outil, dévisser la vis pour permettre le basculement de la barre de galerie autour de l'axe défini par la vis, puis revisser, pour assurer le maintien de la barre de galerie dans la position choisie.

Selon une caractéristique préférentielle, au moins un ressort agissant en compression entre lesdits premiers moyens de fixation et lesdits seconds moyens de fixation.

Ce ressort permet de faciliter le passage du pied dans une position permettant le basculement, lorsque la molette est en position dévissée. Il peut permettre également le débrayage du pied en cas de choc, comme précisé par la suite.

Ce ressort peut notamment comprendre une lame ressort, montée sur la vis.

De façon avantageuse, ledit élément de liaison et/ou ledit pied correspondant comprend des moyens de maintien dudit pied selon un axe sensiblement vertical.

Ainsi, dans un mode de réalisation particulier de l'invention, ledit élément de liaison comprend deux griffes formant une fourchette de maintien, coopérant avec deux bords dudit pied.

Par griffe, on entend ici une extension, ou appendice, ou créneau, ou portion de fourchette, s'étendant dans le prolongement de l'élément de liaison, et définissant deux parois parallèles, formant une fourchette, et assurant le maintien du pied.

Avantageusement, lesdits moyens de maintien sont aptes à libérer en rotation ledit pied, sous une contrainte appliquée à la traverse supérieure à un seuil prédéterminé.

Cette contrainte peut par exemple correspondre à la norme ECE21 précitée. Les moyens de maintien sont alors conformés pour optimiser un compromis entre le maintien du pied, en situation normale, et l'échappement, ou le débrayage de ce dernier (permettant un déplacement en rotation de la barre) en cas de choc.

Selon un mode de réalisation préférentiel, lesdits moyens de maintien et/ou ledit pied présente un plan incliné ou une forme arrondie, au moins sur une portion de guidage de libération dudit pied.

Notamment, on peut prévoir que lesdites griffes présentent, à chacune de leurs extrémités, un plan incliné, et en ce que la surface dudit pied, au moins au voisinage desdits plans inclinés, est arrondie.

Selon une autre caractéristique optionnelle, chacun desdits pieds peut présenter une lumière oblongue, permettant un réglage de la hauteur de ladite traverse, dans ladite position de portage.

L'invention concerne également les véhicules automobiles comprenant un dispositif de galerie intérieure tel que décrit ci-dessus.

Un tel véhicule peut notamment comprendre deux barres de galerie.

### 5. Liste des figures

D'autres caractéristiques et avantages de l'invention apparaîtront plus clairement à la lecture de la description suivante d'un mode de réalisations préférentielles, données à titre de simples exemples illustratifs et non limitatifs et des dessins annexés parmi lesquels :
- la figure 1 illustre un pavillon de véhicules automobiles, plus précisément sa garniture intérieures équipée de deux barres de galeries selon l'invention ;
- les figures 2A et 2B montrent plus précisément une partie d'une des barres de tirage de la figure 1 respectivement en position de transport ou de portage et en position de repos, ou escamotée ;
- la figure 3 présente, de façon plus détaillée, le mécanisme de maintien de l'invention en position de portage ;
- la figure 4 est une représentation schématique des moyens de la figure 3 ;
- la figure 5 présente le pied de la figure 3, en présence d'un choc violent ;
- la figure 6 est une vue schématique correspondant à la figure 5 ;
- les figures 7A et 7B sont deux vues partielles des moyens de maintien de pied dans la galerie selon un mode de réalisation particulier ;
- la figure 8 illustre l'assemblage des moyens de maintien des figures 7A et 7B, avec un pied de galerie.

### 6. Description d'un mode de réalisation de l'invention

### 6.1 généralités

L'invention concerne donc une galerie intérieure de portage, permettant le transport d'objets allongés à l'intérieur du véhicule. Dans le mode de réalisation particulier présenté ci-après, deux barres de galerie sont prévues. Selon les cas, il est possible de prévoir plus de deux barres de galerie, ou au contraire une seule, par exemple si un élément différent, le cas échéant fixe, est prévu à titre de support complémentaire.

Ces barres de galerie peuvent prendre deux positions, une position de repos, ou escamotée, dans laquelle la barre de galerie est placée au voisinage du pavillon, de façon à libérer le volume intérieur du véhicule. Selon les cas, la barre de galerie vient en appui contre le pavillon, ou à proximité de celui-ci. Il est également possible de prévoir un logement, au moins partiel, défini dans la garniture intérieure du pavillon.

La barre de galerie peut également prendre une position de transport, ou de portage, dans laquelle elle est éloignée du pavillon. Il est possible de prévoir, dans certains modes de réalisations, un réglage de la hauteur de la barre de galerie dans cette position de portage.

Selon une autre caractéristique avantageuse de ce mode de réalisation, les moyens de solidarisation, de fixation, de la barre de galerie au véhicule sont conçus de façon à permettre un dégagement des pieds de la galerie en dehors de leur moyen de maintien, et en conséquence une rotation de la barre, en cas de choc violent.

### 6.2 structure d'une barre de galerie

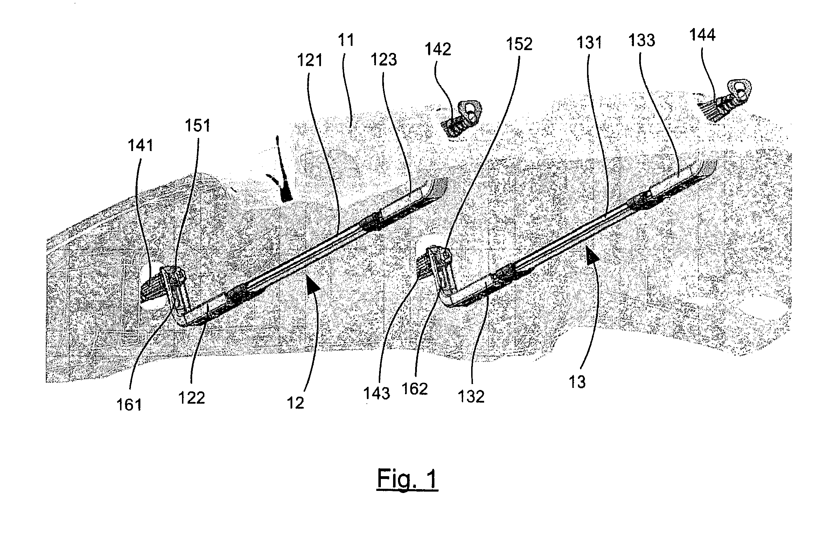

La figure 1 illustre la garniture intérieure 11, de façon schématique, du pavillon d'un véhicule automobile, équipé de deux barres de galerie intérieures 12 et 13.

Chacune de ces barres de galerie 12 et 13 comprend une traverse 121, 131, et deux pieds d'extrémités 122, 123, 132, 133.

Chacun de ces pieds présentent une forme générale d'équerre, dont l'une des parties forme le prolongement de la traverse, et l'autre partie est solidarisée à un élément de liaison 141, 142, 143, 144 solidarisés au châssis du véhicule.

Une mollette 151, 152 permet de bloquer chaque pied par rapport à son élément de liaison.

Sur la figure 1, les deux barres de galerie sont en position de portage. On note, sur chaque pied, la présence d'une lumière oblongue 161, 162, permettant un réglage en hauteur des barres de tirage par coulissement par rapport à l'axe de vissage des mollettes.

### 6.3 position de portage et position escamotée

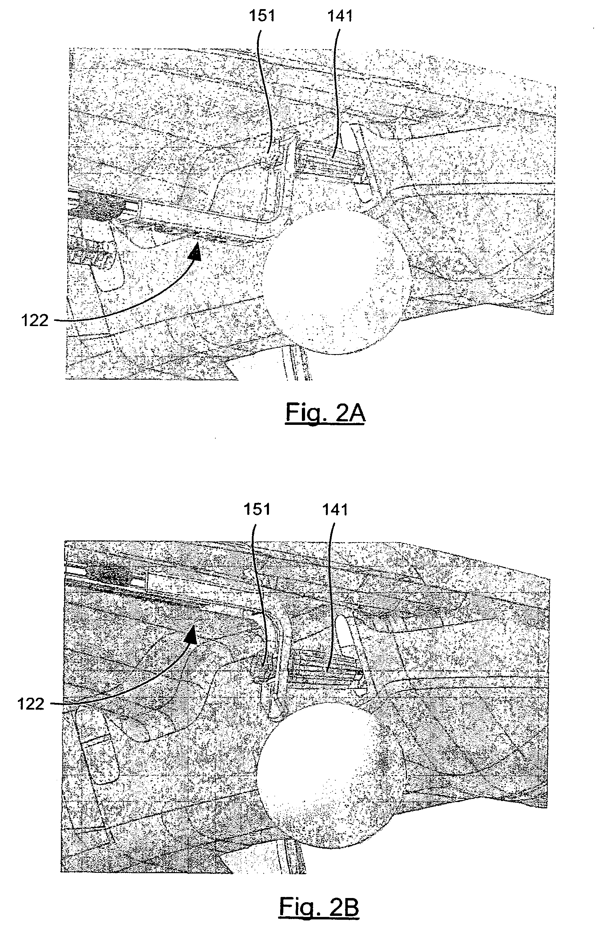

La figure 2A est une vue agrandie d'un des pieds de galerie 122, en position de portage. La figure 2B illustre le même pied 122, en position de repos ou escamoté.

Pour passer de la première position à la deuxième, on a dévissé la mollette 151 de façon à permettre d'éloigner le pied 122 (plus précisément, sa partie verticale) de l'élément de liaison 141 puis on a basculé la barre de galerie de 180°.

Les moyens de maintien de l'élément de liaison 141 étant conçus de façon à recevoir le pied dans les deux positions, on a alors replacé ce dernier dans le moyen de maintien (décrits plus en détails par la suite), puis revissé la mollette 151.

On dispose ainsi d'un système simple et efficace pour escamoter les barres de galerie lorsqu'elles ne sont pas utilisées.

### 6.4 moyens de maintien

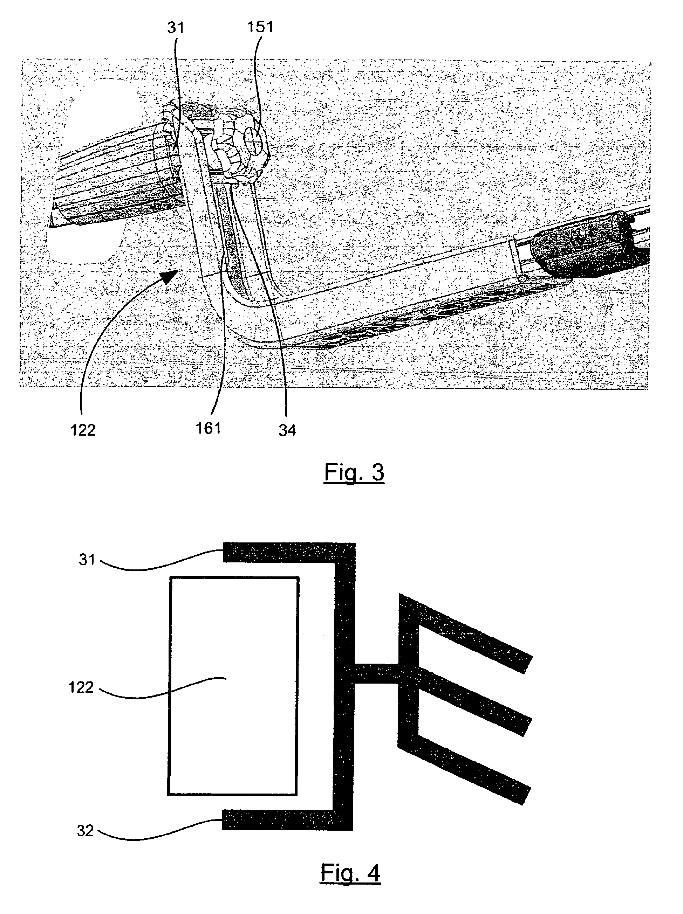

La figure 3 présente plus précisément les moyens de maintien, qui sont également illustrés schématiquement par la figure 4.

L'élément de liaison 141 comprend, à son extrémité, deux prolongements, 31, 32 (un seul apparaissant sur la figure 3) s'étendant selon un axe vertical, et définissant une fourchette de maintien du pied 122.

La mollette porte une vis, coopérant avec un taraudage réalisé dans l'élément de liaison. Une lame ressort 34 est montée sur la vis, entre le pied et la mollette.

La lame ressort 34, travaillant en compression, sous le serrage de la mollette, plaque le pied de galerie 122 dans la fourchette définie par les prolongements 31 et 32.

Le pied de galerie est ainsi maintenu efficacement, quelle que soit la position, position de portage ou position escamotée. Cette approche permet également un réglage en hauteur de la barre de galerie du fait de la présence la lumière oblongue 161 sur le pied.

### 6.5 échappement en cas de choc

Comme indiqué précédemment, il est cependant souhaitable que la barre de galerie puisse s'échapper de sa position de portage, et se déplacer en rotation par rapport aux éléments de liaison, ou fusibles, dans le cas d'un choc violent, tel que celui mis en oeuvre pour le test relatif à la normalisation ECE21.

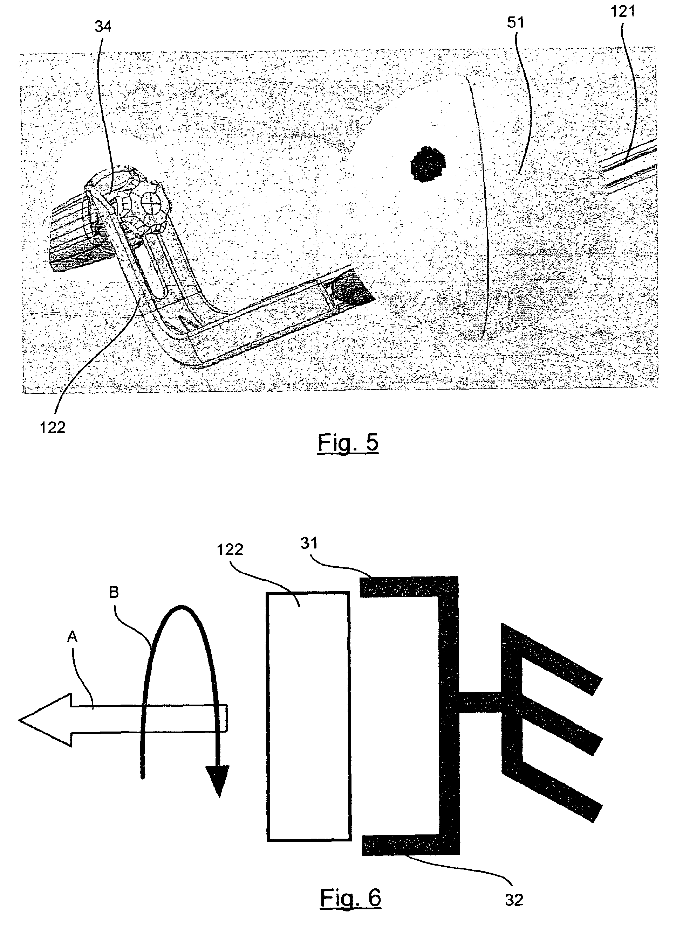

Dans ce cas, illustré par la figure 5, où une tête ou un objet 51 vient heurter la traverse, les pieds se désolidarisent des moyens de maintien 31, 32, et peuvent tourner autour de l'axe de vissage de la molette.

Sous l'effet de ce choc, le pied 122 se dégage des prolongements 31 et 32, en se décalant vers l'intérieur du véhicule (flèche A) et en comprimant le ressort 34. La barre de galerie peut alors tourner autour de l'axe (flèche B) pour s'échapper de ses positions naturelles (figures 2A ou 2B).

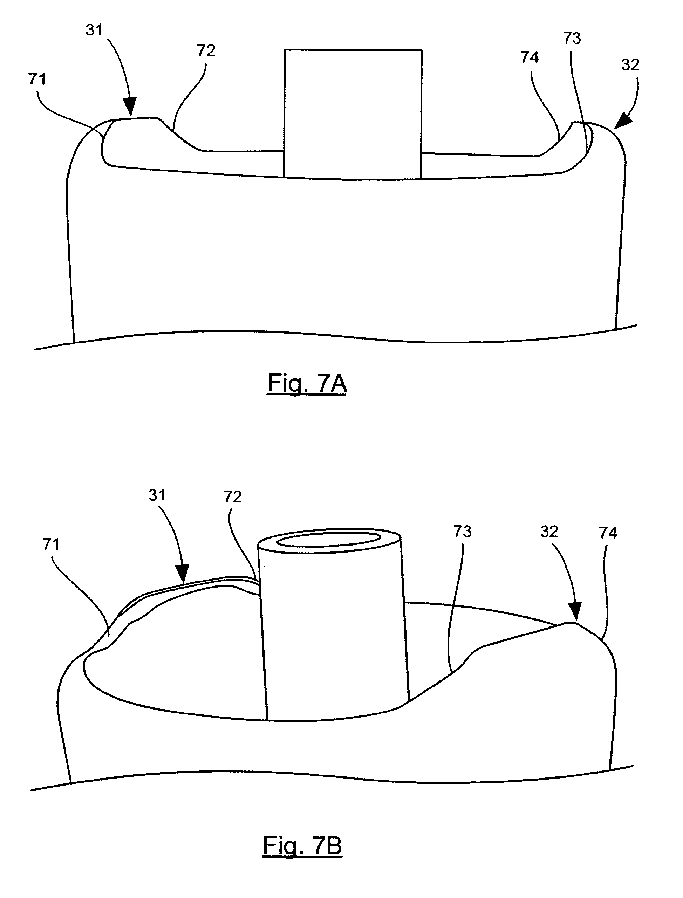

Pour faciliter cet échappement, les griffes 31 et 32 sont munies de plans inclinés ou rampes, 71, 72, 73 et 74, comme cela apparaît sur les deux vues des figures 7A et 7B présentant l'extrémité d'un élément de liaison 141. D'autres formes, par exemple arrondies ou ellipsoïdales, sont envisageables.

On comprend que ces plans inclinés facilitent le débrayage du pied, c'est-à-dire sa sortie de la fourchette formée par les griffes 31 et 32, lorsqu'une force importante est appliquée sur la traverse, par exemple par l'intermédiaire de l'objet 51. Plus la pente est forte, plus l'effort nécessaire au dégagement du pied est important. La pente est donc choisie de façon à optimiser la sécurité, par exemple dans le respect du test de l'ECE21, tout en assurant un maintien correct et efficace de la barre en situation normale.

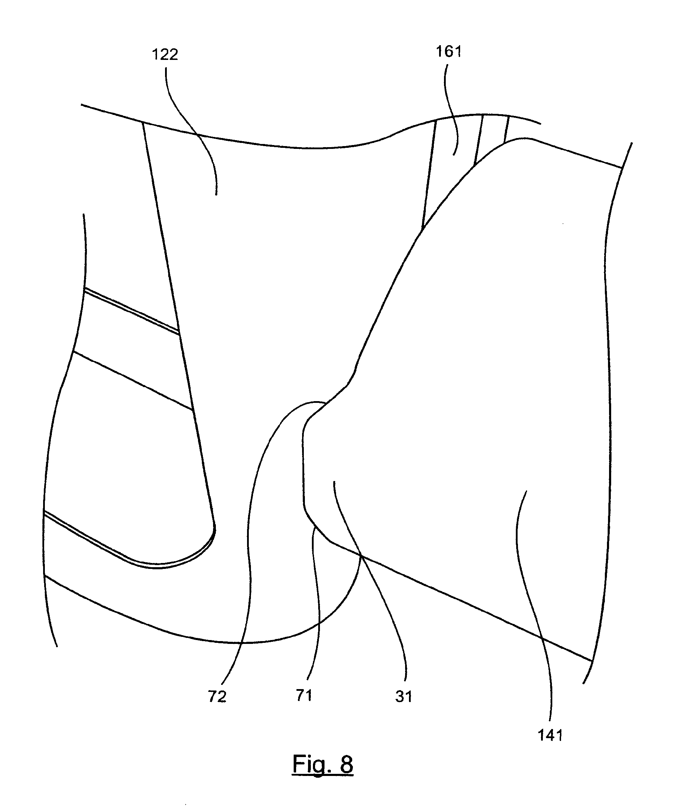

Comme cela apparaît sur la figure 8, qui présente une vue partielle de l'assemblage d'un pied de barres de galerie 122 et d'un élément de liaison 141, la forme de ce pied peut également être adaptée, pour faciliter le désengagement de celui-ci de la fourchette formée par les griffes 31 et 32 (non visible). Ainsi, la surface coopérant avec la griffe 31 peut présenter une forme arrondie, apte à coopérer avec les plans inclinés 71 et 72.

De même que pour la forme de ce plan incliné, la forme du pied est adaptée pour optimiser le compromis entre la sécurité et le maintien du pied. En outre, les matériaux utilisés, et ou le revêtement du pied et de l'élément de liaison peuvent être adaptés en conséquence.

Il est à noter que ces formes particulières, qui facilitent l'échappement en cas de choc, permettent également de rendre plus facile le changement de position des barres de galerie lorsque l'utilisateur a dévissé la mollette 151. En effet, l'utilisateur n'a pas besoin de tirer sur le pied, mais simplement de pousser sur la traverse, pour que le pied et les plans inclinés coopèrent pour permettre le dégagement de la fourchette.

### 6.6 variantes

Il est bien sûr possible d'envisager d'autre moyen de maintien que les deux griffes formant une fourchette, pour assurer les fonctions de maintien du pied dans la position de portage et dans la position escamotée, et pour permettre un débrayage en cas de choc. Par exemple, on peut prévoir un ou plusieurs bossages, sur le pied ou sur l'élément de liaison, coopérant avec une lumière ou un trou borgne sur l'autre pièce.

Les formes de ces moyens de maintien peuvent être adaptées, de même que les griffes précédemment décrites, pour représenter des pentes ou des formes arrondies facilitant le dégagement, dans les conditions souhaitées.

D'autres moyens de verrouillage que la mollette peuvent également être envisagés, tels qu'une gâchette ou un levier.

Il est par ailleurs possible de prévoir que les barres de galerie sont démontables, lorsqu'elles ne sont pas utilisées.

## Revendications

1. Dispositif de galerie intérieure pour véhicule automobile, comprenant au moins une barre (12) s'étendant au voisinage du pavillon dudit véhicule, ladite barre comprenant une traverse (121,131) et deux pieds (122,123,132,133) portant des premiers moyens de fixation (151,152) aptes à coopérer avec des seconds moyens de fixation (161,162) complémentaires solidaires d'un élément de liaison (141,143) avec le châssis dudit véhicule,
lesdits premiers et/ou seconds moyens de fixation permettant de maintenir ladite barre dans au moins deux positions distinctes,
- une position escamotée, dans laquelle ladite traverse s'étend au voisinage dudit pavillon ;
- une position de portage, dans laquelle ladite traverse est éloignée dudit pavillon, de façon à pouvoir recevoir une charge à transporter, **caractérisé en ce que** les deux positions distinctes correspondent à un retournement à 180° desdits pieds.

2. Dispositif selon la revendication 1, **caractérisé en ce que** lesdits premiers moyens de fixation comprennent une molette montée à l'extrémité d'une vis coopérant avec un taraudage formé dans ledit élément de liaison.

3. Dispositif selon l'une quelconque des revendications 1 et 2, **caractérisé en ce qu'**il comprend au moins un ressort agissant en compression entre lesdits premiers moyens de fixation et lesdits seconds moyens de fixation.

4. Dispositif selon la revendication 3, **caractérisé en ce que** ledit ressort comprend une lame ressort.

5. Dispositif selon l'une quelconque des revendications 1 à 4, **caractérisé en ce que** ledit élément de liaison et/ou ledit pied correspondant comprend des moyens de maintien dudit pied selon un axe sensiblement vertical.

6. Dispositif selon la revendication 5, **caractérisé en ce que** ledit élément de liaison comprend deux griffes formant une fourchette de maintien, coopérant avec deux bords dudit pied.

7. Dispositif selon l'une quelconque des revendications 5 et 6, **caractérisé en ce que** lesdits moyens de maintien sont aptes à libérer en rotation ledit pied, sous une contrainte appliquée à la traverse supérieure à un seuil prédéterminé.

8. Dispositif selon la revendication 7, **caractérisé en ce que** lesdits moyens de maintien et/ou ledit pied présente un plan incliné ou une forme arrondie, au moins sur une portion de guidage de libération dudit pied.

9. Dispositif selon les revendications 6 et 8, **caractérisé en ce que** lesdites griffes présentent, à chacune de leurs extrémités, un plan incliné, et **en ce que** la surface dudit pied, au moins au voisinage desdits plans inclinés, est arrondie.

10. Dispositif selon l'une quelconque des revendications 1 à 9, **caractérisé en ce que** chacun desdits pieds présente une lumière oblongue, permettant un réglage de la hauteur de ladite traverse, dans ladite position de portage.

11. Véhicule automobile comprenant un dispositif de galerie intérieure selon la revendication 1.

## Claims

1. Interior roof rack device for a motor vehicle, comprising at least one bar (12) which extends in the region of the roof of the vehicle,
the bar comprising a cross-member (121, 131) and two feet (122, 123, 132, 133) which carry first fixing means (151, 152) which are capable of co-operating with complementary second fixing means (161, 162) which are fixedly joined to an element (141, 143) for connection to the chassis of the vehicle,
the first and/or second fixing means allowing the bar to be retained in at least two separate positions:
- a retracted position in which the cross-member extends in the region of the roof;
- a carrying position in which the cross-member is remote from the roof in order to be able to receive a load to be transported, **characterised in that** the two separate positions correspond to an inversion of the feet through 180°.

2. Device according to claim 1, **characterised in that** the first fixing means comprise a knurled wheel which is mounted at the end of a screw which co-operates with a tapped portion which is formed in the connection element.

3. Device according to either claim 1 or claim 2, **characterised in that** it comprises at least one spring which acts in terms of compression between the first fixing means and the second fixing means.

4. Device according to claim 3, **characterised in that** the spring comprises a spring leaf.

5. Device according to any one of claims 1 to 4, **characterised in that** the connection element and/or the corresponding foot comprise(s) means for retaining the foot along a substantially vertical axis.

6. Device according to claim 5, **characterised in that** the connection element comprises two grippers which form a retention fork, co-operating with two edges of the foot.

7. Device according to either claim 5 or claim 6, **characterised in that** the retention means are capable of releasing the foot for rotation, under a stress which is applied to the cross-member and which is greater than a predetermined threshold.

8. Device according to claim 7, **characterised in that** the retention means and/or the foot has/have an inclined plane or a rounded shape, at least over a portion for guiding the release of the foot.

9. Device according to claims 6 and 8, **characterised in that** the grippers have, at each of the ends thereof, an inclined plane, and **in that** the surface of the foot, at least in the region of the inclined planes, is rounded.

10. Device according to any one of claims 1 to 9, **characterised in that** each of the feet has an oblong aperture which allows the height of the cross-member to be adjusted in the carrying position.

11. Motor vehicle comprising an interior roof rack device according to claim 1.

## Patentansprüche

1. Innendachträger für Kraftfahrzeuge, umfassend wenigstens eine Stange (12), die sich in der Nähe des Dachs des Kraftfahrzeugs erstreckt, wobei die Stange einen Querträger (121, 131) und zwei Füße (122, 123, 132, 133) umfasst, welche erste Befestigungsmittel (151, 152) tragen, die geeignet sind, mit komplementären zweiten Befestigungsmitteln (161, 162) zusammenzuwirken, die über ein Verbindungselement (141, 143) mit dem Fahrgestell des Fahrzeugs verbunden sind,
wobei die ersten und/oder zweiten Befestigungsmittel ermöglichen, die Stange in wenigstens zwei verschiedenen Positionen zu halten:
- eine eingeklappte Position, in der sich der Querträger in der Nähe des Dachs erstreckt;
- eine Trageposition, in welcher der Querträger vom Dach entfernt ist, so dass er eine Last zum Transportieren aufnehmen kann, **dadurch gekennzeichnet, dass** die beiden verschiedenen Positionen einem Umkehren der Füße um 180° entsprechen.

2. Vorrichtung nach Anspruch 1, **dadurch gekennzeichnet, dass** die ersten Befestigungsmittel ein am Ende einer Schraube montiertes Rändelrad umfassen, das mit einem im Befestigungselement ausgeformten Gewinde zusammenwirkt.

3. Vorrichtung nach einem der Ansprüche 1 und 2, **dadurch gekennzeichnet, dass** sie wenigstens eine Feder umfasst, die zwischen den ersten Befestigungsmitteln und den zweiten Befestigungsmitteln unter Spannung steht.

4. Vorrichtung nach Anspruch 3, **dadurch gekennzeichnet, dass** die Feder ein Federblatt umfasst.

5. Vorrichtung nach einem der Ansprüche 1 bis 4, **dadurch gekennzeichnet, dass** das Verbindungselement und/oder der entsprechende Fuß Haltemittel des Fußes in einer im Wesentlichen vertikalen Achse umfasst.

6. Vorrichtung nach Anspruch 5, **dadurch gekennzeichnet, dass** das Verbindungselement zwei Klauen umfasst, die eine Haltegabel bilden, die mit zwei Rändern des Fußes zusammenwirkt.

7. Vorrichtung nach einem der Ansprüche 5 und 6, **dadurch gekennzeichnet, dass** die Haltemittel geeignet sind, bei einer auf den oberen Querträger ausgeübten Last über einer definierten Schwelle unter Drehung den Fuß freizugeben.

8. Vorrichtung nach Anspruch 7, **dadurch gekennzeichnet, dass** die Haltemittel und/oder der Fuß eine schiefe Ebene oder eine abgerundete Form wenigstens in einem Freigabeführungsteil des Fußes aufweisen.

9. Vorrichtung nach den Ansprüchen 6 und 8, **dadurch gekennzeichnet, dass** die Klauen an beiden Enden eine schiefe Ebene aufweisen und dass die Oberfläche des Fußes wenigstens in Nähe der schrägen Ebenen abgerundet ist.

10. Vorrichtung nach einem der Ansprüche 1 bis 9, **dadurch gekennzeichnet, dass** jeder der Füße eine längliche Öffnung aufweist, die eine Regelung der Höhe des Querträgers in der Trageposition ermöglicht.

11. Kraftfahrzeug umfassend einen Innendachträger nach Anspruch 1.
